# EUROPEAN PATENT APPLICATION

(11) **EP 4 531 150 A2**
(43) Date of publication of application: **02.04.2025**
(21) Application number: 24198290.9
(22) Date of filing: 03.09.2024
(51) Int. Cl.: H01M 10/04, H01M 50/103, H01M 10/0585

(54) **RECHARGEABLE BATTERY**

(30) Priority: 26.09.2023 KR 20230129508
(71) Applicant: SAMSUNG SDI CO., LTD., Giheung-gu Yongin-si, Gyeonggi-do 17084 (KR)
(72) Inventor: KIM, Duckhyun, 17084 Yongin-si (KR)
(74) Representative: Marks & Clerk LLP

(57) **Abstract**

A rechargeable battery includes a housing including a hexagonal plate extending in first direction and a hexagonal pillar extending from the hexagonal plate in second direction crossing the first direction and an electrode assembly inside the housing and including a plurality of electrode plates stacked in the first direction.

## Description

### BACKGROUND

### 1. Field

Aspects of embodiments of the present disclosure relate to a rechargeable battery.

### 2. Description of the Related Art

Generally, a rechargeable battery is a battery that is designed to be repeatedly charged and discharged.

A rechargeable battery includes an electrode assembly and a housing that stores (or accommodates) the electrode assembly therein.

A conventional rechargeable battery may have a hexagonal pillar housing and an electrode assembly accommodated in the hexagonal pillar housing to efficiently arrange a plurality of secondary batteries in a rechargeable battery module.

However, such a conventional rechargeable battery has an issue in that a jelly roll shape electrode assembly is positioned inside the hexagonal pillar housing, resulting in dead space between the corners of the hexagonal pillar housing and the electrode assembly, which reduces the capacity of the rechargeable battery.

### SUMMARY

Embodiments of the present disclosure provide a rechargeable battery having a hexagonal pillar shape with improved battery capacity.

According to an embodiment of the present disclosure, a rechargeable battery includes: a hexagonal pillar housing including a hexagonal plate extending in a first direction and a hexagonal pillar extending from the hexagonal plate in a second direction crossing the first direction; and an electrode assembly inside the hexagonal pillar housing and including a plurality of electrode plates stacked in the first direction.

The plurality of electrode plates may extend in the second direction.

The plurality of electrode plates may have different lengths from each other in the first direction (e.g. a third direction that crosses the first direction in a horizontal direction) .

From among the plurality of electrode plates, one electrode plate positioned at the center of the electrode assembly in the first direction may have a longer length in the first direction (e.g. a third direction that crosses the first direction in a horizontal direction) than the other electrode plates.

From among the plurality of electrode plates, an outermost one of the electrode plates in the first direction may have a shorter length in the first direction (e.g. a third direction that crosses the first direction in a horizontal direction) than the other electrode plates.

Each of the plurality of electrode plates may include: a first electrode; a second electrode; and a separator between the first electrode and the second electrode.

The first electrode may include: a first active material coating portion; and a first uncoated region at an end of the first active material coating portion.

The second electrode may include: a second active material coating portion corresponding to the first active material coating portion with the separator therebetween; and a second uncoated region at an end of the second active material coating portion and offset from the first uncoated region in the first direction.

The second uncoated region may be on an opposite side with respect to the first uncoated region in the second direction.

An area of the second active material coating portion with respect to the entire plurality of electrode plates may be larger than the area of the first active material coating portion with respect to the entire plurality of electrode plates.

From among the plurality of electrode plates, an end of one of the electrode plates adjacent to a corner of the hexagonal pillar may have a curved surface rounded toward a corner of the hexagonal pillar.

The electrode assembly may include a plurality of electrode assemblies spaced apart from each other inside the hexagonal pillar housing.

Each of the plurality of electrode assemblies may have a different shape than each other.

The plurality of electrode plates in each of the plurality of electrode assemblies may have the same length in the first direction (e.g. a third direction that crosses the first direction in a horizontal direction).

A plurality of first electrode plates in a first electrode assembly from among the plurality of electrode assemblies may be stacked in a different direction in the first direction than a plurality of second electrode plates in a second electrode assembly from among the plurality of electrode assemblies.

Each of the plurality of electrode plates may have a quadrangle shape.

According to another embodiment of the present disclosure, a rechargeable battery includes: a hexagonal pillar housing including a hexagonal plate extending in a first direction and a hexagonal pillar extending from the hexagonal plate in a second direction crossing the first direction; and an electrode assembly inside the hexagonal pillar housing and including a plurality of electrode plates stacked in the second direction.

The plurality of electrode plates may extend in the first direction.

Each of the plurality of electrode plates may have a hexagonal shape.

Corners of the plurality of electrode plates may be rounded toward corners of the hexagonal pillar.

At least some of the above and other features of the invention are set out in the claims.

According to embodiments of the present disclosure, a rechargeable battery having a hexagonal pillar shape with improved battery capacity is provided.

### BRIEF DESCRIPTION OF THE DRAWINGS

FIG. 1 is a perspective view of a rechargeable battery according to an embodiment.
FIG. 2 is a cross-sectional view taken along the line II-II of FIG. 1.
FIG. 3 is a diagram illustrating an example of a rechargeable battery storage process according to an embodiment.
FIG. 4 is a cross-sectional view of a rechargeable battery according to another embodiment.
FIG. 5 is a cross-sectional view of a rechargeable battery according to another embodiment.
FIG. 6 is a perspective view of a rechargeable battery according to another embodiment.
FIG. 7 is a cross-sectional view taken along the line VII-VII of FIG. 6.
FIG. 8 is a cross-sectional view taken along the line VIII-VIII of FIG. 6.
FIG. 9 is a cross-sectional view of a rechargeable battery according to another embodiment.

### DETAILED DESCRIPTION OF THE EMBODIMENTS

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

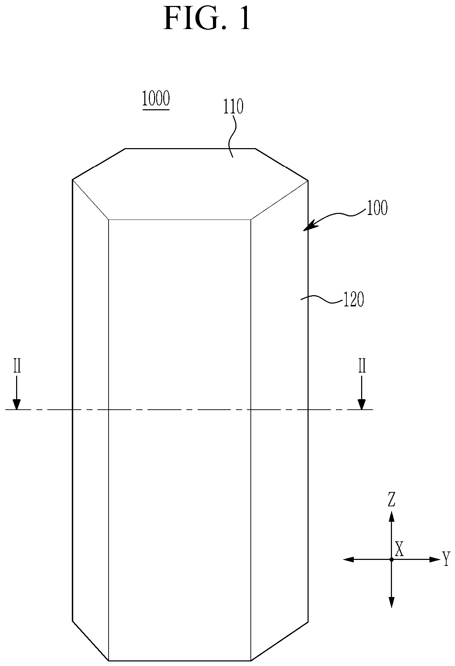

Hereinafter, a rechargeable battery according to an embodiment will be described with reference to FIGS. 1 to 3.

The rechargeable battery, according to an embodiment, is a rechargeable battery having the hexagonal pillar shape. As used herein, the hexagonal pillar shape may include a regular hexagon or other hexagonal shapes.

The rechargeable battery, according to an embodiment, is a rechargeable battery having the hexagonal pillar shape and may have an aspect ratio (e.g., height/width ratio) of about 1 or more. The present disclosure, however, is not limited thereto and may include a battery having an aspect ratio of less than about 1. The width may include (or may refer to) the maximum distance based on the horizontal direction of the rechargeable battery, and the height may include (or may refer to) the maximum distance based on the vertical direction of the rechargeable battery.

For example, a first direction of the rechargeable battery, according to an embodiment, may be a horizontal direction, and a second direction may be a vertical direction.

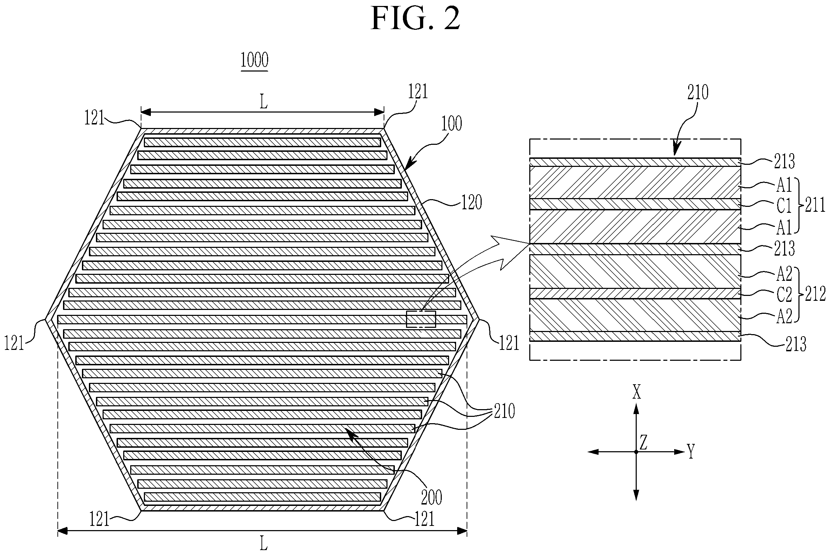

FIG. 1 is a perspective view showing a rechargeable battery according to an embodiment. FIG. 2 is a cross-sectional view taken along the line II-II of FIG. 1.

Referring to FIGS. 1 and 2, a rechargeable battery 1000, according to an embodiment, is a rechargeable battery designed to be charged and discharged and includes a hexagonal pillar housing 100 and an electrode assembly 200.

The hexagonal pillar housing 100 accommodates the electrode assembly 200 therein. The hexagonal pillar housing 100 may be a hexagonal pillar-shaped can that accommodates the electrode assembly 200 but is not limited thereto. The hexagonal pillar housing 100 may accommodate various known electrolytes together with the electrode assembly 200. The outer surface of the hexagonal pillar housing 100 may be coated with various suitable coating layers. The hexagonal pillar housing 100 may include at least one of aluminium and stainless steel, but the hexagonal pillar housing is not limited thereto and may include at least one of various suitable metals and various suitable polymers.

The hexagonal pillar housing 100 includes a hexagonal pillar 120 and hexagonal plates 110 positioned at the upper and lower ends of the hexagonal pillar 120.

The hexagonal plate 110 is positioned at the upper and lower ends of the hexagonal pillar 120 and seals the interior of the hexagonal pillar housing 100 together with the hexagonal pillar 120. The hexagonal plate 110 positioned at each of the upper and lower ends may include, but is not limited to, various suitable terminals of the rechargeable battery 1000. The hexagonal plate 110 extends in a first direction (e.g., an X-direction) and a second direction (e.g., a Y-direction) that cross each other in the horizontal direction. The hexagonal plate 110 may have a regular hexagonal shape on a plane, but it is not limited thereto and may have various suitable hexagonal shapes.

The hexagonal pillar 120 extends from the hexagonal plate 110 in a vertical third direction (e.g., a Z-direction) that crosses the second direction (e.g., the Y-direction). The hexagonal pillar 120 seals the interior of the hexagonal pillar housing 100 together with the hexagonal plate 110. The hexagonal pillar 120 and the hexagonal plate 110 may be coupled by welding, but the present disclosure is not limited thereto. In other embodiments, the hexagonal pillar 120 and the hexagonal plate 110 may be coupled by using various suitable coupling methods.

The electrode assembly 200 is accommodated inside the hexagonal pillar housing 100. The lower portion of the electrode assembly 200 faces the hexagonal plate 110 positioned at the lower end of the hexagonal pillar housing 100, and the upper portion of the electrode assembly 200 faces the hexagonal plate 110 positioned at the upper end of the hexagonal pillar housing 100. The electrode assembly 200 includes a plurality of electrode plates 210 stacked in the first direction (e.g., the X-direction), which is a horizontal direction, inside the hexagonal pillar housing 100. For example, the electrode assembly 200 may include the plurality of electrode plates 210 stacked in the second direction (e.g., the Y-direction), which is a different horizontal direction, inside the hexagonal pillar housing 100. The plurality of electrode plates 210 may be in contact with each other or may be spaced apart from each other.

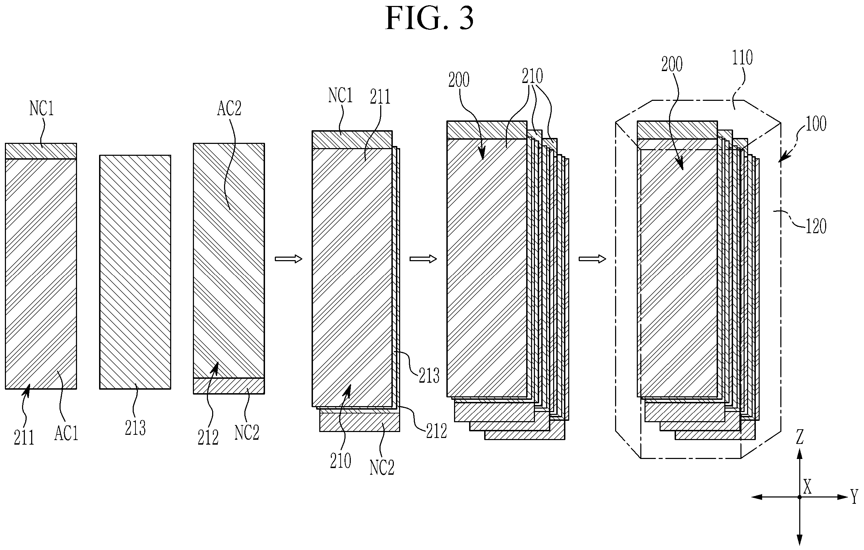

FIG. 3 is a diagram illustrating an example of a storage process for an electrode assembly of a rechargeable battery according to an embodiment.

Referring to FIGS. 2 and 3, the plurality of electrode plates 210 extend inside the hexagonal pillar housing 100 in the vertical third direction (e.g., the Z-direction), and have different lengths L in a second (horizonal) direction (e.g., the Y-direction).

For example, from among the plurality of electrode plates 210, an electrode plate 210 positioned at the center in the first direction (e.g., the X-direction), which is a horizontal direction, may have a longer length L in the second direction (e.g., the Y-direction), which is a different horizontal direction, compared to other electrode plates 210.

As another example, from among the plurality of electrode plates 210, an electrode plate 210 positioned as the outermost electrode plate 210 in the first direction (e.g., the X-direction), which is a horizontal direction, may have a shorter length L in the second direction (e.g., the Y-direction), which is a different horizontal direction, compared to other electrode plates 210.

As another example, each of the plurality of electrode plates 210 may have a quadrangle shape extending in a different horizontal second direction (e.g., the Y-direction) and a vertical third direction (e.g., the Z-direction). Each of the plurality of electrode plates 210 has a rectangular shape but is not limited thereto. In other embodiments, each of the plurality of electrode plates 210 may have various suitable quadrangle shapes, such as a square shape, trapezoid, or rhombus.

Each of the plurality of electrode plates 210 includes a first electrode 211, a second electrode 212, and a separator 213.

The first electrode 211 and the second electrode 212 are spaced apart from each other with the separator 213 including (or containing) an insulating material being positioned between the first electrode 211 and the second electrode 212. The first electrode 211 may be a cathode, and the second electrode 212 may be an anode, but they are not limited thereto. In other embodiments, the first electrode 211 may be an anode, and the second electrode 212 may be a cathode. The first electrode 211 may be connected to (e.g., physically and/or electrically connected to) the hexagonal plate 110 positioned at the upper end of the hexagonal pillar housing 100, and the second electrode 212 may be connected to (e.g., physically and/or electrically connected to) the hexagonal plate 110 positioned at the lower end of the hexagonal pillar housing 100, but the present disclosure is not limited thereto.

The first electrode 211 has a quadrangle shape extending in the second direction (e.g., the Y-direction) and the third direction (e.g., the Z-direction) and includes a first active material coating portion AC1, which is a region at where a first electrode active material layer A1 is applied to a first current collector C1, and a first uncoated region NC1, which is a region at where the first electrode active material layer A1 is not applied to the first current collector C1. The first uncoated region NC1 may be positioned at one end of the first active material coating portion AC1 in the third direction (e.g., the Z-direction), which is the direction in which the first electrode 211 extends. The first uncoated regions NC1 of the first electrodes 211 included in the plurality of electrode plates 210 may be connected to each other through various suitable connection methods (e.g., welding), but the present disclosure is not limited thereto.

The second electrode 212 is separated from the first electrode 211 with the separator 213 therebetween and has a quadrangle shape extending in the second direction (e.g., the Y-direction) and third direction (e.g., the Z-direction). The second electrode 212 includes a second active material coating portion AC2, which is a region at where a second electrode active material layer A2 is applied to a second current collector C2, and a second uncoated region NC2, which is a region at where the second electrode active material layer A2 is not applied to the second current collector C2.

The second uncoated region NC2 may be positioned at one end of the second active material coating portion AC2 in the third direction (e.g., the Z-direction), which is the direction in which the second electrode 212 extends. The second active material coating portion AC2 of the second electrode 212 overlaps with the first active material coating portion AC1 of the first electrode 211 in the first direction (e.g., the X-direction), which is a horizontal direction, with the separator 213 therebetween. The second uncoated region NC2 of the second electrode 212 does not overlap with the first uncoated region NC1 of the first electrode 211 in the first direction (e.g., the X-direction), which is one horizontal direction. The second uncoated region NC2 of the second electrode 212 is positioned on an opposite side to the first uncoated region NC1 of the first electrode 211 in the third direction (e.g., the Z-direction), which is perpendicular to the first uncoated region NC1. The second uncoated regions NC2 of the second electrodes 212 included in the plurality of electrode plates 210 may be connected to each other through various suitable connection methods (e.g., welding), but the present disclosure is not limited thereto.

The area of the second active material coating portion AC2 with respect to the entirety of the plurality of electrode plates 210 may be larger than the area of the first active material coating portion AC1 with respect to the entirety of the plurality of electrode plates 210, but it is not limited thereto. For example, the area of the second active material coating portion AC2 with respect to the entirety of the plurality of electrode plates 210 may be in a range of about 1 % to about 15% larger than the area of the first active material coating portion AC1 with respect to the entirety of the plurality of electrode plates 210, but it is not limited thereto.

The separator 213 is positioned between the first electrode 211 and the second electrode 212 to prevent a short circuit between the first electrode 211 and the second electrode 212. The separator 213 is positioned between neighboring electrode plates 210 from among the plurality of electrode plates 210 to prevent a short circuit between the first electrode 211 and the second electrode 212 included in each of the plurality of electrode plates 210.

The plurality of electrode plates 210 may be stacked in the first direction (e.g., the X-direction), which is a horizontal direction, to form the electrode assembly 200, and then, the electrode assembly 200 including the plurality of electrode plates 210 stacked in the first direction (e.g., the X-direction) may be accommodated inside the hexagonal pillar housing 100, but the present disclosure is not limited thereto.

A conventional rechargeable battery has a jelly roll shape with a circular cross-sectional shaped electrode assembly positioned inside the hexagonal pillar housing. Therefore, there is dead space between the corners of the hexagonal pillar housing and the circular electrode assembly, which reduces the battery capacity of the rechargeable battery.

The rechargeable battery 1000, according to an embodiment, includes an electrode assembly 200 including a plurality of electrode plates 210 stacked in the first direction (e.g., the X-direction), which is one horizontal direction, or in the second direction (e.g., the Y-direction), which is the other horizontal direction, inside the hexagonal pillar housing 100. Thus, there is no or only very little dead space between the corners 121 of the hexagonal pillar housing 100 and the plurality of electrode plates 210 of the electrode assembly 200, thereby improving the battery capacity of the rechargeable battery 1000.

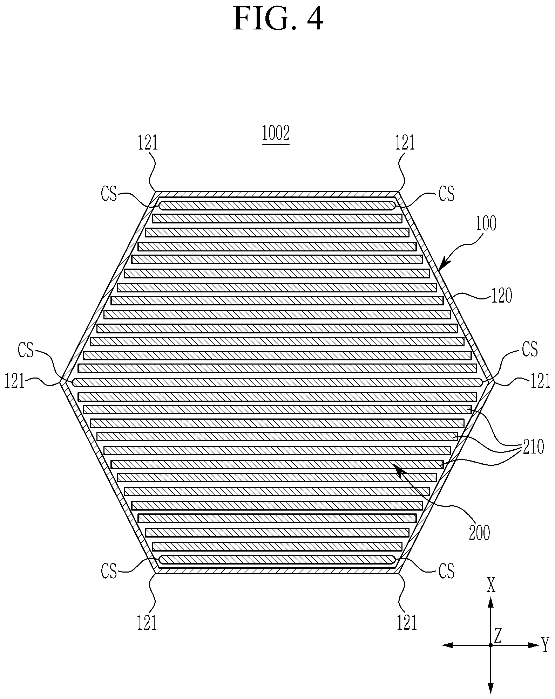

Hereinafter, a rechargeable battery according to another embodiment will be described with reference to FIG. 4.

Hereinafter, parts and configurations that are different from the rechargeable battery according to the above-described embodiment will be described while similar parts and configurations may not be described again or may be only briefly described.

FIG. 4 is a cross-sectional view of a rechargeable battery according to another embodiment.

Referring to FIG. 4, a rechargeable battery 1002, according to another embodiment, is a rechargeable battery designed to be charged and discharged and includes the hexagonal pillar housing 100 and the electrode assembly 200.

The electrode assembly 200 is accommodated inside the hexagonal pillar housing 100. The electrode assembly 200 includes a plurality of electrode plates 210 stacked in the first direction (e.g., the X-direction), which is a horizontal direction, inside the hexagonal pillar housing 100.

The plurality of electrode plates 210 extend inside the hexagonal pillar housing 100 in the vertical third direction (e.g., the Z-direction) and have different lengths L in a different horizontal second direction (e.g., the Y-direction).

From among the plurality of electrode plates 210, an end (e.g., one side) of one electrode plate 210 adjacent to the corner 121 of the hexagonal pillar 120 of the hexagonal pillar housing 100 has a curved surface CS rounded toward (e.g., rounded to correspond to) the corner 121.

For example, from among the plurality of electrode plates 210, both ends of one electrode plate 210 positioned at the center in the first direction (e.g., the X-direction), which is one horizontal direction, in the second horizontal direction (e.g., the Y-direction), which is the other horizontal direction, have the curved surface CS rounded toward the respective corners 121 of the hexagonal pillar 120.

As another example, from among the plurality of electrode plates 210, both ends of one electrode plate 210 positioned as the outermost electrode plate 210 in the first direction (e.g., the X-direction), which is one horizontal direction, in the second horizontal direction (e.g., the Y-direction), which is the other horizontal direction, have the curved surface CS rounded toward the respective corners 121 of the hexagonal pillar 120.

The rechargeable battery 1002, according to another embodiment, includes the plurality of electrode plates 210 of the electrode assembly 200 stacked in the first direction (e.g., the X-direction), which is one horizontal direction, inside the hexagonal pillar housing 100. Thus, there is no or only very little dead space between the corner 121 of the hexagonal pillar housing 100 and the plurality of electrode plates 210 of the electrode assembly 200, thereby improving the battery capacity of the rechargeable battery 1002.

In the rechargeable battery 1002, according to another embodiment, from among the plurality of electrode plates 210, an end of one electrode plate 210 adjacent to the corner 121 of the hexagonal pillar 120 of the hexagonal pillar housing 100 has a curved surface CS rounded toward the corner 121. Thus, damage to the ends of the plurality of electrode plates 210 due to interference with the corner 121 of the hexagonal pillar 120 is reduced while the corner 121 of the hexagonal pillar 120 and the ends of the plurality of electrode plates 210 are closely arranged. Therefore, the reliability of the rechargeable battery 1002 is improved and the battery capacity is improved.

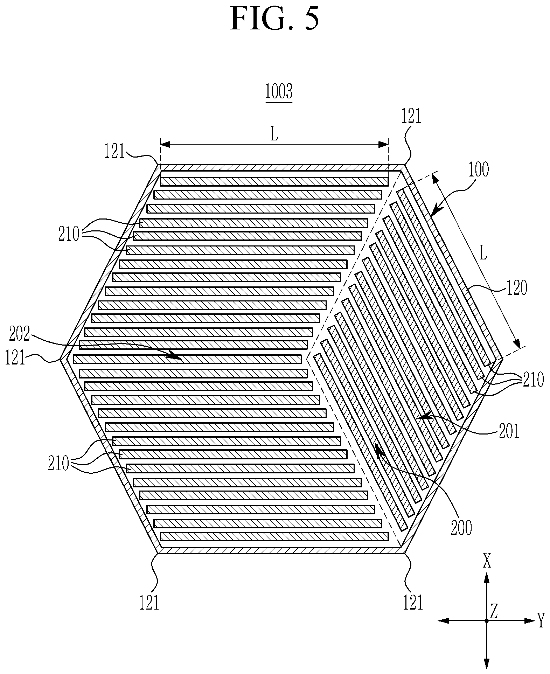

Hereinafter, a rechargeable battery according to another embodiment will be described with reference to FIG. 5.

Hereinafter, parts and configurations that are different from the rechargeable battery according to the above-described embodiment will be described while similar parts and configurations may not be described again or may be only briefly described.

FIG. 5 is a cross-sectional view of a rechargeable battery according to another embodiment.

Referring to FIG. 5, a rechargeable battery 1003, according to another embodiment, includes the hexagonal pillar housing 100 and the electrode assembly 200.

The electrode assembly 200 is accommodated inside the hexagonal pillar housing 100 and includes the plurality of electrode assemblies 200.

The plurality of electrode assemblies 200 include one electrode assembly 201 and another electrode assembly 202 spaced apart from each other inside the hexagonal pillar housing 100.

One electrode assembly 201 and the other electrode assembly 202 have different shapes.

For example, one electrode assembly 201 may have a shape extending in one direction in a planar horizontal direction, and the other electrode assembly 202 may have a shape extending in a different direction in a planar horizontal direction so that the corner 121 of the hexagonal pillar 120 may have a bent and extended shape. The plurality of electrode plates 210 included in one electrode assembly 201 may be stacked in different directions in the horizontal direction with the plurality of electrode plates 210 included in the other electrode assembly 202. One electrode assembly 201 and the other electrode assembly 202 may be electrically connected using various suitable connection methods.

As another example, the horizontal length L of the plurality of electrode plates 210 included in one electrode assembly 201 may have the same length L as the horizontal length L of the plurality of electrode plates 210 included in the other electrode assembly 202. The horizontal length L of the plurality of electrode plates 210 included in each of one electrode assembly 201 and the other electrode assembly 202 may have the same length.

As another example, the plurality of electrode assemblies 200 may include three or more electrode assemblies 200 spaced apart from each other.

The rechargeable battery 1003, according to another embodiment, includes the plurality of electrode plates 210 of the electrode assembly 200 stacked in the horizontal direction inside the hexagonal pillar housing 100. Thus, there is no or very little dead space between the corner 121 of the hexagonal pillar housing 100 and the plurality of electrode plates 210 of the plurality of electrode assemblies 200, thereby improving the battery capacity of the rechargeable battery 1003.

The rechargeable battery 1003, according to another embodiment, includes the plurality of electrode plates 210 included in the plurality of electrode assemblies 200, each having the same length L in a horizontal direction inside the hexagonal pillar housing 100. Thus, the plurality of electrode assemblies 200 may be formed by using the plurality of electrode plates 210 having the same length L and may be accommodated inside the hexagonal pillar housing 100, thereby reducing the manufacturing time and cost of the rechargeable battery 1003.

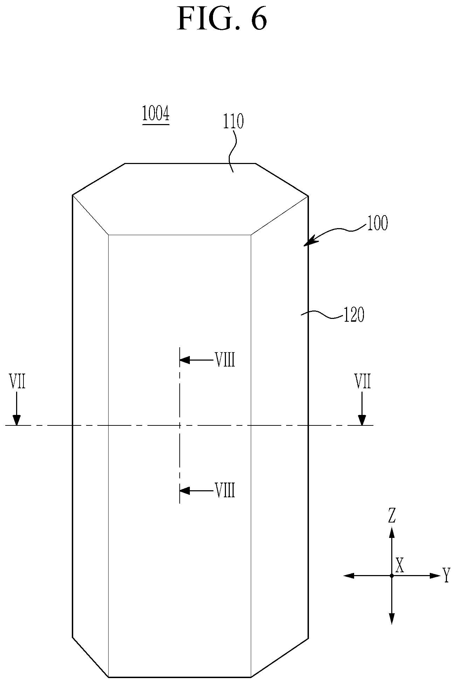

Hereinafter, a rechargeable battery according to another embodiment will be described with reference to FIGS. 6 to 8.

Hereinafter, parts and configurations that are different from the rechargeable battery according to the above-described embodiment will be described while similar parts and configurations may not be described again or may be only briefly described.

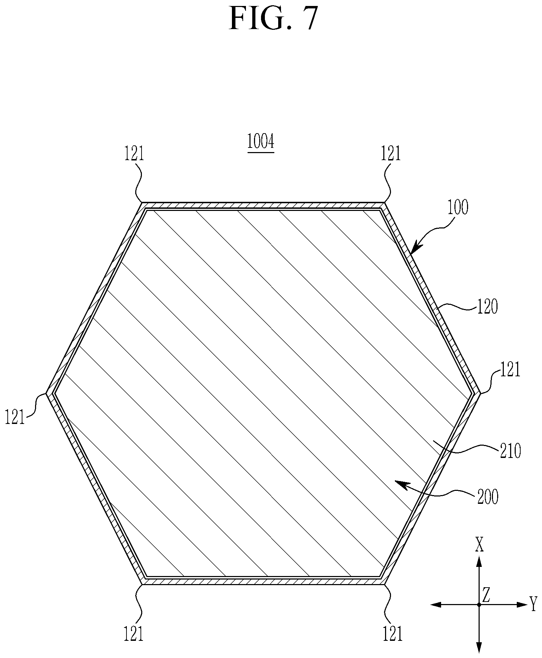

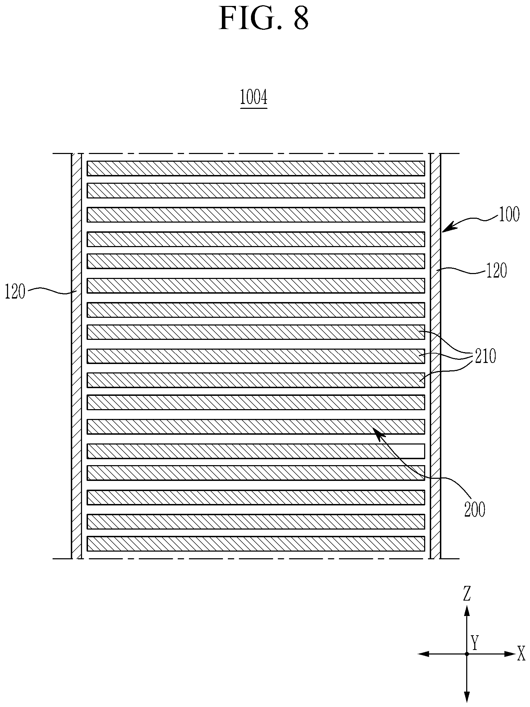

FIG. 6 is a perspective view of a rechargeable battery according to another embodiment, FIG. 7 is a cross-sectional view taken along the line VII-VII of FIG. 6, and FIG. 8 is a cross-sectional view taken along the line VIII-VIII of FIG. 6.

Referring to FIGS. 6 to 8, a rechargeable battery 1004 according to another embodiment includes the hexagonal pillar housing 100 and the electrode assembly 200.

The electrode assembly 200 is accommodated inside the hexagonal pillar housing 100. The electrode assembly 200 includes the plurality of electrode plates 210 stacked in the third direction (e.g., the Z-direction), which is a vertical direction, inside the hexagonal pillar housing 100.

The plurality of electrode plates 210 extend inside the hexagonal pillar housing 100 in the horizontal first direction (e.g., the X-direction) and second direction (e.g., the Y-direction).

For example, the plurality of electrode plates 210 may have the same area.

As another example, each of the plurality of electrode plates 210 may have a hexagonal shape extending in the horizontal first direction (e.g., the X-direction) and second direction (e.g., the Y-direction). Each of the plurality of electrode plates 210 has a hexagonal shape, but the present disclosure is not limited thereto, and the plurality of electrode plates 210 may have a regular hexagonal shape or various suitable hexagonal shapes.

The rechargeable battery 1004, according to another embodiment, includes the plurality of electrode plates 210 of the electrode assembly 200 stacked in the third direction (e.g., the Z-direction), which is a vertical direction, inside the hexagonal pillar housing 100. Thus, there is no or very little dead space between the corner 121 of the hexagonal pillar housing 100 and the plurality of electrode plates 210 of the plurality of electrode assemblies 200, thereby improving the battery capacity of the rechargeable battery 1004.

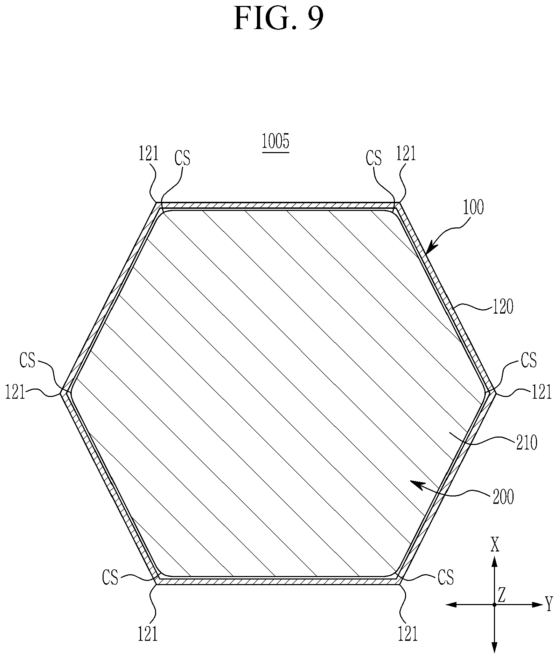

Hereinafter, a rechargeable battery according to another embodiment will be described with reference to FIG. 9.

Hereinafter, parts and configurations that are different from the rechargeable battery according to the above-described embodiment will be described while similar parts and configurations may not be described again or may be only briefly described.

FIG. 9 is a cross-sectional view of a rechargeable battery according to another embodiment.

Referring to FIG. 9, a rechargeable battery 1005, according to another embodiment, includes the hexagonal pillar housing 100 and the electrode assembly 200.

The electrode assembly 200 is accommodated inside the hexagonal pillar housing 100. The electrode assembly 200 includes the plurality of electrode plates 210 stacked in the third direction (e.g., the Z-direction), which is a vertical direction, inside the hexagonal pillar housing 100.

The plurality of electrode plates 210 extend inside the hexagonal pillar housing 100 in the horizontal first direction (e.g., the X-direction) and second direction (e.g., the Y-direction).

For example, the plurality of electrode plates 210 may have the same area.

As another example, each of the plurality of electrode plates 210 may have a hexagonal shape extending in the horizontal first direction (e.g., the X-direction) and second direction (e.g., the Y-direction). Each of the plurality of electrode plates 210 has a hexagonal shape, butt the present disclosure is not limited thereto, and the electrode plates 210 may have a regular hexagonal shape or various suitable hexagonal shapes.

As another example, the hexagonal corners of the plurality of electrode plates 210 have curved surfaces CS rounded toward the corner 121 of the hexagonal pillar 120 of the hexagonal pillar housing 100.

The rechargeable battery 1005, according to another embodiment, includes the plurality of electrode plates 210 of the electrode assembly 200 stacked in the third direction (e.g., the Z-direction), which is a vertical direction, inside the hexagonal pillar housing 100. Thus, there is no or very little dead space between the corner 121 of the hexagonal pillar housing 100 and the plurality of electrode plates 210 of the plurality of electrode assemblies 200, thereby improving the battery capacity of the rechargeable battery 1005.

In the rechargeable battery 1005, according to another embodiment, the hexagonal corners of the plurality of electrode plates 210 have a curved surface CS rounded toward the corner 121 of the hexagonal pillar 120 of the hexagonal pillar housing 100. Thus, damage to the corners of the plurality of electrode plates 210 due to interference with the corners 121 of the hexagonal pillars 120 is reduced, thereby enhancing the reliability of the rechargeable battery 1005.

While embodiments of the present disclosure have been described in detail, it is to be understood that the disclosure is not limited to the described embodiments but, on the contrary, is intended to cover various modifications and equivalent arrangements included within the scope of the appended claims and their equivalents.

**Description of Some Reference Numerals**

| | | | |
|---|---|---|---|
| 100 | hexagonal pillar housing | 110 | hexagonal plate |
| 120 | hexagonal pillar | 200 | electrode assembly |
| 210 | electrode plate | | |

## Claims

1. A rechargeable battery comprising:
a hexagonal pillar housing comprising a hexagonal plate extending in a first direction and a hexagonal pillar extending from the hexagonal plate in a second direction crossing the first direction; and
an electrode assembly inside the hexagonal pillar housing and comprising a plurality of electrode plates stacked in the first direction.

2. The rechargeable battery as claimed in claim 1, wherein the plurality of electrode plates extend in the second direction.

3. The rechargeable battery as claimed in claim 2, wherein the plurality of electrode plates have different lengths from each other in the first direction.

4. The rechargeable battery as claimed in claim 3, wherein, from among the plurality of electrode plates, one electrode plate positioned at the center of the electrode assembly in the first direction has a longer length in the first direction than the other electrode plates.

5. The rechargeable battery as claimed in claim 3 or claim 4, wherein, from among the plurality of electrode plates, an outermost one of the electrode plates in the first direction has a shorter length in the first direction than the other electrode plates.

6. The rechargeable battery as claimed in any one of claims 1 to 5, wherein each of the plurality of electrode plates comprises:
a first electrode;
a second electrode; and
a separator between the first electrode and the second electrode.

7. The rechargeable battery as claimed in claim 6, wherein the first electrode comprises:
a first active material coating portion; and
a first uncoated region at an end of the first active material coating portion.

8. The rechargeable battery as claimed in claim 7, wherein the second electrode comprises:
a second active material coating portion corresponding to the first active material coating portion with the separator therebetween; and
a second uncoated region at an end of the second active material coating portion and offset from the first uncoated region in the first direction.

9. The rechargeable battery as claimed in claim 8, wherein:
(i) the second uncoated region is on an opposite side with respect to the first uncoated region in the second direction; and/or
(ii) an area of the second active material coating portion with respect to the entire plurality of electrode plates is larger than the area of the first active material coating portion with respect to the entire plurality of electrode plates.

10. The rechargeable battery as claimed in any one of claims 1 to 9, wherein, from among the plurality of electrode plates, an end of one of the electrode plates adjacent to a corner of the hexagonal pillar has a curved surface rounded toward a corner of the hexagonal pillar.

11. The rechargeable battery as claimed in claim 1, wherein the electrode assembly comprises a plurality of electrode assemblies spaced apart from each other inside the hexagonal pillar housing.

12. The rechargeable battery as claimed in claim 11, wherein:
(i) each of the plurality of electrode assemblies has a different shape than each other; and/or
(ii) the plurality of electrode plates in each of the plurality of electrode assemblies have the same length in the first direction; and/or
(iii) a plurality of first electrode plates in a first electrode assembly from among the plurality of electrode assemblies are stacked in a different direction in the first direction than a plurality of second electrode plates in a second electrode assembly from among the plurality of electrode assemblies.

13. The rechargeable battery as claimed in any one of claims 1 to 12, wherein each of the plurality of electrode plates has a quadrangle shape.

14. A rechargeable battery comprising:
a hexagonal pillar housing comprising a hexagonal plate extending in a first direction and a hexagonal pillar extending from the hexagonal plate in a second direction crossing the first direction; and
an electrode assembly inside the hexagonal pillar housing and comprising a plurality of electrode plates stacked in the second direction.

15. The rechargeable battery as claimed in claim 14, wherein:
(i) the plurality of electrode plates extend in the first direction; and/or
(ii) each of the plurality of electrode plates has a hexagonal shape; and/or
(iii) corners of the plurality of electrode plates are rounded toward corners of the hexagonal pillar.
